(19) Europäisches Patentamt
European Patent Office
Office européen des brevets

(11) Veröffentlichungsnummer: **0 236 268**
**A1**

(12) **EUROPÄISCHE PATENTANMELDUNG**

(21) Anmeldenummer: **87810097.3**

(22) Anmeldetag: **19.02.87**

(51) Int. Cl.[4]: **A 01 N 25/32**, A 01 N 43/42

(30) Priorität: **25.02.86 CH 736/86**

(43) Veröffentlichungstag der Anmeldung: **09.09.87 Patentblatt 87/37**

(84) Benannte Vertragsstaaten: **AT BE CH DE ES FR GB GR IT LI NL SE**

(71) Anmelder: **CIBA-GEIGY AG, Klybeckstrasse 141, CH-4002 Basel (CH)**

(72) Erfinder: **Martin, Henry, Dr., Schützenmattstrasse 52, CH-4051 Basel (CH)**

(54) **Halogenacylierte Amine zum Schützen von Kulturpflanzen vor der phytotoxischen Wirkung von stark wirksamen Halogenacyl-Herbiziden.**

(57) Halogenacylierte 1,2,3,4-Tetrahydroisochinoline der untenstehenden Formel I sind geeignet als Gegenmittel („Antidot" oder „Safener") Kulturpflanzen, insbesondere Getreide, Mais, Hirse, Reis vor der phytotoxischen Wirkung von Halogenacyl-Herbiziden zu schützen, ohne dass dadurch die gewünschte Herbizidwirkung auf Unkräuter ebenfalls reduziert würde.

Die 1,2,3,4-Tetrahydroisochinoline entsprechen

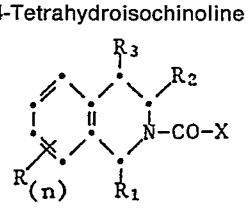

(I)

R gleich oder verschieden Wasserstoff, Halogen, $C_1$-$C_4$-Alkyl, $C_1$-$C_4$-Alkoxy, $C_1$-$C_4$-Alkylthio, Halogenallyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und X

$C_1$-$C_6$-Halogenalkyl oder $C_2$-$C_6$-Halogenalkenyl bedeuten,

mit der Massgabe, dass wenn R Wasserstoff bedeutet $R_1$, $R_2$ und $R_3$ nicht ebenfalls Wasserstoff sein dürfen.

EP 0 236 268 A1

CIBA-GEIGY AG 5-15765/+

Basel (Schweiz)

# Halogenacylierte Amine zum Schützen von Kulturpflanzen vor der phytotoxischen Wirkung von stark wirksamen Halogenacyl-Herbiziden

Die vorliegende Erfindung betrifft ein Mittel zum Schutz von Kulturpflanzen vor der phytotoxischen Wirkung von stark wirksamen Halogenacyl-Herbiziden, welches als Herbizid-antagonisierenden Wirkstoff ein halogenacyliertes Tetrahydroisochinolin enthält, ferner Mittel welche neben diesem antagonisierenden Wirkstoff bereits das Herbizid enthalten und ein Verfahren zur selektiven Unkrautbekämpfung mittels dieser Herbizide und diesem Gegenmittel. Die Erfindung umfasst auch neue Tetrahydroisochinoline und weitere Verfahren zu deren Herstellung.

Es ist bekannt, dass Herbizide aus den verschiedensten Stoffklassen, wie Triazine, Harnstoffderivate, Carbamate, Thiolcarbamate, Halogenacetanilide, Halogenphenoxyessigsäuren usw. bei der Anwendung in wirksamer Dosis gelegentlich neben den zu bekämpfenden Unkräutern auch die Kulturpflanzen in gewissem Masse schädigen. Es können klimatische Verhältnisse oder eine Bodenbeschaffenheit vorliegen, so dass die für normale Bedingungen empfohlene Herbizidmenge als Ueberdosis wirkt. Die Qualität des Saatgutes kann bei der Herbizidverträglichkeit auch eine Rolle spielen. Um diesem Problem zu begegnen, sind schon verschiedene Stoffe vorgeschlagen worden, welche befähigt sind, die schädigende Wirkung des Herbizides auf die Kulturpflanze spezifisch zu antagonisieren, d.h. die Kulturpflanze zu schützen, ohne dabei die Herbizidwirkung auf die zu bekämpfenden Unkräuter merklich zu beeinflussen. Dabei hat es sich gezeigt, dass die vorgeschlagenen Gegenmittel sowohl bezüglich der Kulturpflanzen als auch bezüglich des Herbizides und gegebenenfalls auch in

Abhängigkeit von der Applikationsart oft sehr artspezifisch wirken, d.h. ein bestimmtes Gegenmittel eignet sich oft nur für eine bestimmte Kulturpflanze und einige wenige herbizide Stoffklassen.

Vom wirtschaftlichen Gesichtspunkt müssen bei der Verwendung von chemischen Schutzmitteln (Safener) gegen Herbizide mehrere Faktoren in Betracht gezogen werden. Das chemische Behandlungsmittel muss ein Stoff sein, der lange genug in enger Berührung mit dem Nutzpflanzengut bleibt, um die auflaufenden Nutzpflanzen zu schützen, bis keine phytotoxisch gefährdende Konzentration an dem Herbizid mehr vorhanden ist. Andere Verbindungen neigen dazu, phytotoxische Wirkungen auf die Nutzpflanzen selbst auszuüben. Dies kann auf dreierlei Weise erfolgen, nämlich durch Verhinderung des Auflaufens der Nutzpflanzen, so dass eine schlechte Keimung stattfindet, durch Erzeugung von Missbildungen beim Wachstum der auflaufenden Nutzpflanzen und durch Verkümmerung oder Verzögerung des Wachstums der Nutpflanzen. In einigen Fällen lassen sich diese Wirkungen durch einfaches Herabsetzen der Anwendungskonzentration der Mittel beseitigen. In anderen Fällen scheint es aber nicht möglich zu sein, die Verbindungen in einer genügend niedrigen Konzentration anzuwenden, dass die Schädigung auf ein wirtschaftlich tragbares Ausmass herabgesetzt wird. In einigen Fällen schützen die chemischen Behandlungsmittel die Nutzpflanzen zwar gegen die herkömmlichen Mengen an Herbiziden; wenn aber gelgentlich Ueberdosierungen vorkommen, wie z.B. beim Ueberlappen von Spritzflächen, bieten die Verbindungen keinen Schutz mehr. Für die technische Anwendung ist es daher in Anbetracht der Möglichkeit solcher gelegentlicher und unbeabsichtiger Ueberdosierungen z.B. in sich überlappender Behandlungsflächen wünschenswert, das Saatgut gegen etwa das Doppelte der beabsichtigten Anwendungskonzentration der Unkrautbekämpfung zu schützen.

Die direkte pre- oder postemergente Behandlung von Getreide und Mais mit Gegenmitteln als Antagonisten von Thiocarbamaten und anderen Herbizidklassen auf einer Anbaufläche ist in den Deutschen Offenlegungsschriften 2.141.586 und 2.218.097, sowie im US-Patent 3.867.444 beschrieben.

Ferner können Maispflanzen gemäss der Deutschen Offenlegungsschrift 2.402.983 wirksam vor Schädigung durch Chloracetanilide geschützt werden, indem man dem Boden als Gegenmittel ein N-disubstituiertes Dichloracetamid zuführt. Derartige Verbindungen werden gemäss US-PS 4.137.070 auch als Antidotes bei herbiziden Thiocarbamaten verwendet oder gemäss DE-OS 2.828.265 und 2.828.293 als Antidot gegen herbizide Acetanilide.

Es wurde nun gefunden, dass sich überraschenderweise eine Gruppe Acylamid-Derivaten hervorragend dazu eignet, Kulturpflanzen gegen schädigende Wirkung von Agrarchemikalien, wie beispielsweise Pflanzenschutzmitteln, insbesondere Herbiziden, zu schützen. Diese Acylamid-Derivate werden daher im folgenden auch als "Gegenmittel", "Antidot" oder "Safener" bezeichnet.

Die halogenacylierten 1,2,3,4-Tetrahydro-isochinoline, die zum Schützen von Kulturpflanzen gegen die schädigende Wirkung von herbizid wirksamen Chloracetaniliden geeignet sind entsprechen der Formel I

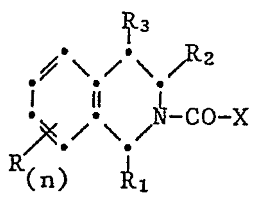

(I)

worin

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und X $C_1$-$C_6$-Halogenalkyl oder $C_2$-$C_6$-Halogenalkenyl bedeuten, mit der Massgabe, dass wenn R Wasserstoff bedeutet $R_1$, $R_2$ und $R_3$ nicht ebenfalls Wasserstoff sein dürfen.

Soweit optisch isomere Verbindungen der Formel I existieren, sind im Rahmen der vorliegenden Erfindung sowohl die optisch reinen Isomere wie auch die Isomerengemische zu verstehen.

Unter Halogen selbst in den Definitionen sowie Halogen als Teil in Halogenalkoxy, Halogenalkyl oder Halogenalkenyl sind Fluor, Chlor, Brom und Jod, vorzugsweise jedoch Fluor, Chlor und Brom, insbesondere aber Chlor zu verstehen.

In den Definitionen ist unter Alkyl geradkettiges oder verzweigtes Alkyl zu verstehen; z.B.: Methyl, Aethyl, n-Propyl, i-Propyl oder die isomeren Butyl, Pentyl oder Hexyl.

Unter Alkoxy ist zu verstehen: Methoxy, Aethoxy, n-Propyloxy, i-Propyloxy oder die isomeren Butyloxy-, Pentyloxy- oder Hexyloxyreste, insbesondere aber Methoxy, Aethoxy oder i-Propyloxy.

Beispiele für ungesättigte Substituenten oder Substituententeile sind Allyl, Allyloxy, Propargyl, Propargyloxy, Methallyl, Methallyloxy, Butenyl, Butenyloxy, Butinyl, Butinyloxy, 3,3,3-Trilfluor-1-propenyl, 3,3,3-Trichlor-1-propinyl oder 2,3-Dichlorpropen-yl.

Alkoxyalkylreste werden repräsentiert durch Methoxymethyl, Aethoxymethyl, Methoxyäthyl und Aethoxyäthyl, Propoxyäthyl, Isopropoxyäthyl, Butoxyäthyl, Allyloxyäthyl, insbesondere aber Methoxyäthyl.
Halogenalkyl als Substituenten wie Halogenalkoxy oder Halogenalkylthio steht in der Regel für Chlormethyl, Fluormethyl, Difluormethyl, Trifluormethyl, Dichlormethyl, Trichlormethyl, 2-Chloräthyl, 2,2,2-Trilfluoräthyl, 1,1,2,2-Tetrafluoräthyl, Pentafluoräthyl, 1,1,2-Trifluor-2-chloräthyl, 2,2,-Trifluor-1,1-dichloräthyl, Pentachloräthyl, 3,3,3-Trifluorpropyl, 2,3-Dichlorpropyl, 2-Chlorpropyl, 1,1,2,3,3,3-Hexafluorpropyl, 3,3,3-Trichlorpropyl, 2,2,2-Trichloräthyl, 1-Chloräthyl, insbesondere aber Chlormethyl, Dichlormethyl, Trichlormethyl und 1-Chloräthyl.

Wegen ihrer Wirkung als Herbizidantagonisten sind diejenigen Acylamid-Derivate der Formel I hervorzuheben, in denen R Wasserstoff und $R_1$ Methyl, Aethyl oder Isopropyl; R Methoxy, Dimethoxy oder Methylendioxy und $R_1$, $R_2$, $R_3$ Wasserstoff sowie R Chlor und $R_1$, $R_2$, $R_3$ Wasserstoff oder R Dichlor und $R_1$, $R_2$, $R_3$ Wasserstoff bedeuten.

Bevorzugte Verbindungen sind:
N-Dichloracetyl-1-methyl-tetrahydroisochinolin
N-Dichloracetyl-1-äthyl-tetrahydroisochinolin,
N-Dichloracetyl-1-isopropyltetrahydroisochinolin,
N-Dichloracetyl-7-methoxy-tetrahydroisochinolin,
N-Dichloracetyl-6,7-dimethoxy-tetrahydroisochinolin,
N-Dichloracetyl-6,7-methylendioxy-tetrahydroisochinolin,
N-Dichloracetyl-7,8-dichlor-tetrahydroisochinolin
N-Dichloracetyl-7-chlor-tetrahydroisochinolin,
N-Dichloracaetyl-7-fluor-tetrahydroisochinolin
N-2-Chlorpropionyl-6,7-dimethoxy-tetrahydroisochinolin.

Des weiteren betrifft die Erfindung neue 1,2,3,4-Tetrahydroisochinoline der Formel I

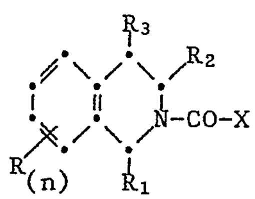

(I)

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und

X $C_1$-$C_6$-Halogenalkyl oder $C_2$-$C_6$-Halogenalkenyl bedeuten,

mit der Massgabe, dass folgende Verbindungen nicht mit umfasst sind:
2-Dichloracetyl-1,2,3,4-tetrahydroisochinolin,
2-Dichloracetyl-1-methyl-1,2,3,4-tetrahydroisochinolin,
2-Dichloracetyl-1-aethyl-1,2,3,4-tetrahydroisochinolin,
2-Dichloracetyl-1-isopropyl-1,2,3,4-tetrahydroisochinolin,
2-Dichloracetyl-1,3-dimethyl-1,2,3,4-tetrahydroisochinolin,
2-Dichloracetyl-6,7-dimethoxy-1,2,3,4-tetrahydroisochinolin,
2-Dichloracetyl-3-ethyl-1,2,3,4-tetrahydroisochinolin
und
2-Dichloracetyl-4-ethyl-1,2,3,4-tetrahydroisochinolin.

Die Acylamide der Formel I werden hergestellt, indem man ein Acylhalid der Formel II

X-CO-Q (II),

worin Q Chlor oder Brom bedeuten oder einen Rest O-COX und X die unter Formel I gegebene Bedeutung hat, in einem inerten organischen Lösungsmittel, in Gegenwart der mindestens äquimolaren Menge eines säurebindenden Mittels, mit einem 1,2,3,4-Tetrahydroisochinolin der Formel III umsetzt

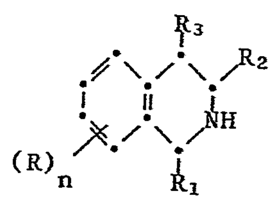

(III),

worin n, R, $R_1$, $R_2$ und $R_3$ die unter Formel I gegebene Bedeutung haben.

Als Acylierungsmittel seien genannt:
das Chloracetylchlorid
das Dichloracetylchlorid
das 2-Chlorpropionsäurechlorid
das 2,2-Dichlorpropionsäurechlorid
das 2-Chlor-acrylsäurechlorid
das Trichloracetylchlorid

das Dibrompropionsäurechlorid
das Brompropionsäurechlorid
das Chlor-crotonsäurechlorid

Die Reaktion wird zweckmässigerweise in einem reaktionsinerten Lösungsmittel bei Normaldruck durchgeführt. Als Lösungsmittel eignen sich beispielsweise aliphatische oder aromatische Kohlenwasserstoffe wie Benzol, Toluol, Xylole, Cyclohexan, Petroläther, halogenierte Kohlenwasserstoffe wie Chlorbenzol, Methylenchlorid, Aethylenchlorid, Chloroform, Aether und ätherartige Verbindungen wie Diäthyläther, Diisopropyläther, t-Butylmethyläther, Dimethoxyäthan, Dioxan, Tetrahydrofuran, Anisol; Ketone wie Aceton, Methyläthylketon; Ester wie Aethylacetat, Butylacetat und Gemische solcher Lösungsmittel untereinander.

Als säurebindende Mittel sind insbesondere tertiäre Amine wie Trimethylamin, Triäthylamin, Chinuclidin, 1,4-Diazabicyclo-(2,2,2)-cotan, 1,5-Diazabicyclo(4,3,0)non-5-en oder 1,5-Diazabicyclo(5,4,0)-undec-7-en geeignet. Es können aber auch anorganische Basen wie Hydridewie Natrium- oder Calciumhydrid, Hydroxide wie Natrium- und Kaliumhydroxid, Carbonate wie Natrium-und Kaliumcarbonat oder Hydrogencarbonate wie Kalium- und Natriumhydrogencarbonat verwendet werden. Es kann auch die doppelmolare Menge des 1,2,3,4-Tetrahydroisochinolins verwendet werden.

Die Ausgangsverbindungen der Formel II sind bekannt; die Ausgangsverbindungen der Formel III sind teilweise bekannt bzw. können nach bekannten Methoden hergestellt werden. Teilweise sind es Stoffe aus der Reihe der sympathicolytisch wirkenden Pharmaka.

Nach Decker und Becker (Ann 395 342 (1913) werden Phenylalkylamine mit Aldehyden zu Schiff'schen Basen kondensiert und diese mittels Salzsäure ringgeschlossen.

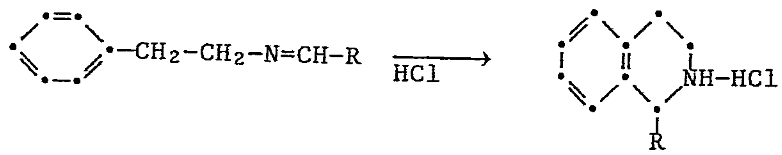


Eine spezielle Ausführungsform ist die Kondensation von 3,4-Dimethoxyphenyläthylamin (Homoveratrylamin) und Formaldehyd in Gegenwart von Ameisensäure, wobei sich nach der Behandung des 3,4-Dimethoxy-N-methylen-phenyläthylamin und Salzsäure das 6,7-Dimethoxy-isochinolinchlorhydrat bildet. (Synth. Commun. 14 (1984) 1221-1228).

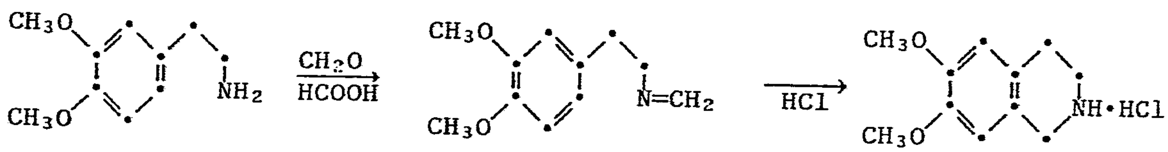


Man kann auch acylierte Phenyläthylamine mit Polylphosphonsäure bei Temperaturen zwischen 130° und 200°C zu Dihydroisochinolinen kondensieren und anschliessend hydrieren. (Ber. 91 1551 (1958)).

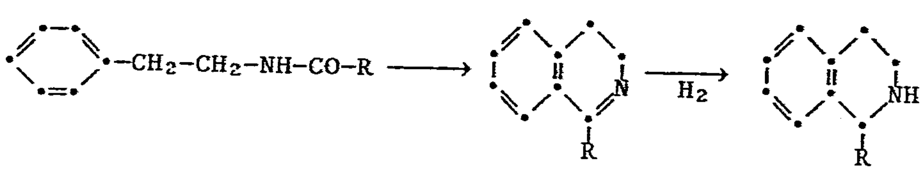


Ein anderer Weg geht von Benzaldehyd bzw. einem substituierten Benzaldehyd aus durch Kondensation mit Aminoacetaldehyddimethylacetal mit anschliessendem Ringschluss z.B. mittels Schwefelsäure und nachfolgender Hydrierung zum Tetrahydroisochinolin in Gegenwart von Salzsäure.

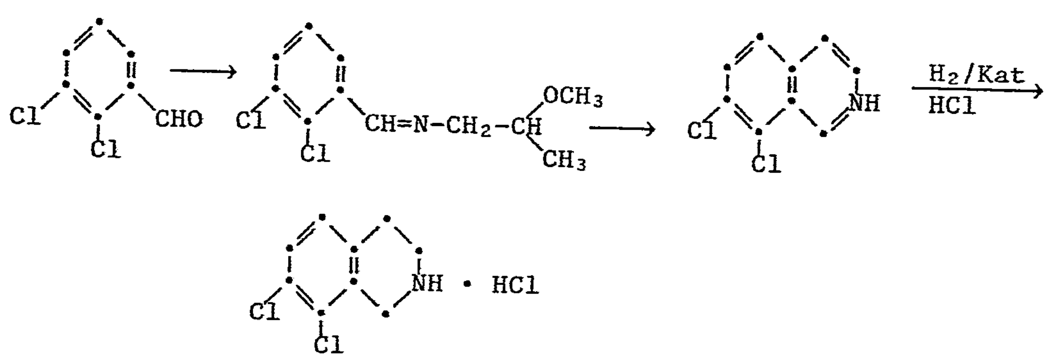

J. Med. Chem. (1980) 23 506-511
J. Org. Chem. (1980) 45 1950-1953
Tetrahed. Lett. (1980) 21 1393-6

DOS 2 505 005
USP. 4 200 754
USP. 3 988 339; 3 314 963

Durch eine spezielle Reaktion kann das 1-Methyl-Isochinolin auch durch Kondensation von Isochinolin mit Dimethylsulfoxyd in Gegenwart von Natriumhydrid durch zweistündige Behandlung mit Ultraschall bei 25° gebildet werden.

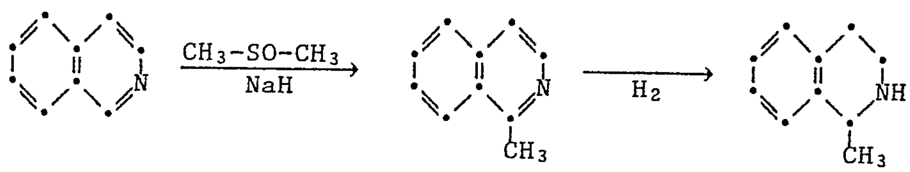


Durch nachträglicher Hydrierung wird das 1-Methyl-Tetrahydroisochinolin gewonnen.

Ein weiteres Verfahren zur Herstellung von Halogenacyl-tetra-hydroisochinolin der Formel I besteht darin, nicht acylierte Verbindungen der Formel III mit Chloral oder einem durch Addition an dessen Oxogruppe gebildeten Chloralderivat in wässrigem Medium und/oder einem polaren organischen Lösungsmittel, in Gegenwart säurebindender Mittel und der katalytischen Menge eines anorganischen oder organischen Cyanides umsetzt. (DE-OS 2 807 340)

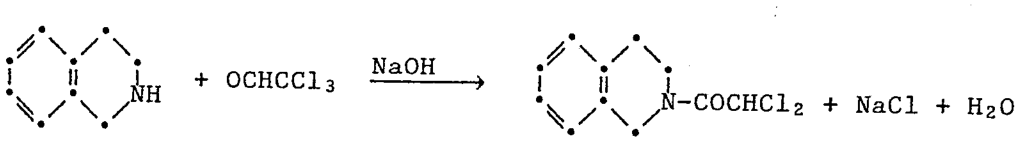


Anstelle von Chloral kann auch Chloralhydrat, anstelle von NaOH auch ein Ueberschuss an sekundärer Base bzw. einem Alkali- oder Erdalkalisalz einer schwachen Säure wie z.B. Natriumbicarbonat oder Calciumcarbonat verwendet werden. Die Umsetzung wird durch Alkalicyanide beschleunigt.

Die Erfindung betrifft auch ein Verfahren zur Herstellung von 1,2,3,4-Tetrahydroisochinolinen der Formel I

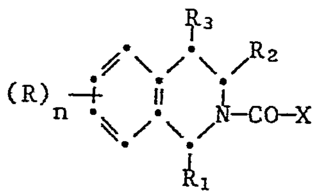

(I)

worin

X $CHCl_2$

und

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3 und

$R_1$, $R_2$ und $R_3$ je Wasserstoff, $C_1$-$C_6$-Alkyl oder $C_3$-$C_6$-Alkenyl bedeuten, dadurch gekennzeichnet, dass man ein 1,2,3,4-Tetrahydro-isochinolin der Formel III

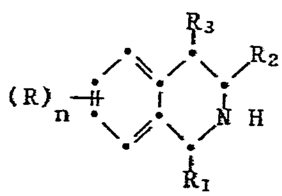

(III)

worin $R_{(n)}$, $R_1$, $R_2$ und $R_3$ wie zuvor definiert sind, mit Choral oder einem durch Addition an dessen Oxogruppe gebildetem Chloralderivat in einem wässrigen Medium, und/oder einem polaren organischen Lösungsmittel, in Gegenwart säurebindender Mittel und der katalytisch wirkenden Menge eines anorganischen oder organischen Cyanides umsetzt.

Halogenacylierte hydrierte Isochinoline bzw. Chinolinderivate sind aus der Literatur bekannt.

So wurde das dichloracylierte Perhydrochinolin bereits in der DE-OS 2 218 097 erwähnt. Auch das dichloracylierte Tetrahydrochinolin (DE-OS 2 828 265) bzw. das dichloracylierte Tetrahydrochinaldin (DE-OS 2 828 293, DOS 2 828 265) sowie das 2-Chlorpropionyltetrahydrochinaldin (EP-A 023 306, EP-A 023 307) sind als Safener (Antidote) beschrieben. Dasselbe gilt auch für das dichloracylierte Tetrahydroisochinaldin (DE-OS 2 245 471 und DE-OS 2 828 222).

Die erfindungsgemässen halogenacylierten 1,2,3,4-Tetrahydro-isochinolinderivate der Formel I zeigen ausgezeichnete Safenerwirkung und sind in ihrer Wirkung bekannten Verbindungen überlegen.

Ein Gegenmittel oder Antidot der Formel I kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidot kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Gegenmittel (Tankmischung) erfolgen. Die preemergente Behandlung schliesst sowohl die Behandlung der Anbaufläche vor der Aussaat (ppi = pre plant incorporation) als auch die Behanldung der angesäten, aber noch nicht bewachsenen Anbauflächen ein.

Die Aufwandmengen des Gegenmittels im Verhältnis zum Herbizid richten sich weitgehend nach der Anwendungsart. Bei einer Feldbehandlung, bei der Herbizid und Gegenmittel entweder gleichzeitig (Tankmischung) oder separat appliziert werden, liegt das Verhältnis der Mengen von Gegenmittel zu Herbizid im Bereich von 1:100 bis 5:1. In der Regel wird bei einem Mengenverhältnis von Gegenmittel zu Herbzid von 1:5 bis 1:50 die volle Schutzwirkung erreicht. Bei der Samenbeizung und ähnlichen gezielten Schutzmassnahmen werden jedoch weit geringere Mengen Gegenmittel im Vergleich mit den später pro Hektar Anbaufläche verwendeten Mengen an Herbizid benötigt. Im allgemeinen werden bei der Samenbeizung pro kg Samen 0,1-10 g Gegenmittel benötigt. In der Regel wird mit 0,1-5 g Gegenmittel pro

kg Samen bereits die volle Schutzwirkung erreicht. Falls das Gegenmittel kurz vor der Aussaat durch Samenquellung appliziert werden soll, so werden zweckmässig Lösungen des Gegenmittels verwendet, welche den Wirkstoff in einer Konzentration von 1-10'000 ppm enthalten. In der Regel wird mit Konzentrationen des Gegenmittels von 100-1'000 ppm die volle Schutzwirkung erreicht.

Die zur Erzielung der gewünschten Safening Effekts notwendige Menge des Antidots I kann je nach Anwendungsart und Zeitpunkt sehr unterschiedlich sein und ist durch einfache Versuche nicht zu ermitteln.

In der Regel liegt zwischen protektiven Massnahmen, wie Samenbeizung und Behandlung von Stecklingen mit einem Gegenmittel der Formel I und der möglichen späteren Feldbehandlung mit Agrarchemikalien ein längerer Zeitraum. Vorbehandeltes Saat- und Pflanzengut kann später in der Landwirtschaft, im Gartenbau und in der Forstwirtschaft mit unterschiedlichen Chemikalien in Berührung kommen. Die Erfindung bezieht sich daher auf protektive Mittel für Kulturpflanzen, die als Wirkstoff ein Gegenmittel der Formel I zusammen mit üblichen Trägerstoffen enthalten. Solche Mittel können gegebenenfalls zusätzlich jene Agrarchemikalien enthalten, vor deren Einfluss die Kulturpflanze geschützt werden soll.

Als Kulturpflanzen gelten im Rahmen vorliegender Erfindung alle Plfanzen, die in irgendeiner Form Ertragsstoffe, wie Samen, Wurzeln, Stengel, Knollen, Blätter, Blüten, ferner Inhaltsstoffe, wie Oele, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Kulturhirse, Mais, Baumwolle, Zuckerrüben, Zuckerrohr, Soja, Bohnen und Erbsen.

Das Gegenmittel kann überall dort eingesetzt werden, wo eine Kulturpflanze der vorgenannten Art vor der schädlichen Wirkung einer Agrarchemikalie geschützt werden soll. Dabei kommen als Agrarchemikalien in erster Linie Herbizide der verschiedensten Stoffklassen, insbesondere jedoch Halogenacetanilide, in Betracht.

Halogenacetanilide, deren schädigende Wirkung gegenüber Kulturpflanzen mit Hilfe der Acylamid-Derivate der Formel I aufgehoben werden kann, sind bereits in grosser Zahl bekannt geworden. Solche Halogenacetaniliden können durch die folgende allgemeine Formel IV beschrieben werden:

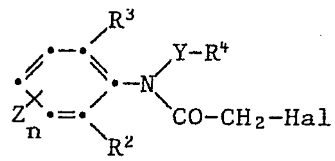

(IV).

In dieser Formel bedeuten Hal Halogen, insbesondere Chlor oder Brom, $R^2$ und $R^3$ unabhängig voneinander je Wasserstoff, Halogen, niederes Alkyl, Alkoxy, Alkylthio, Halogenalkyl, Alkoxyalkyl oder Alkylthioalkyl, Z Wasserstoff, Halogen, niederes Alkyl, Alkoxy, Alkylthio, Halogenalkyl, Alkoxyalkyl oder Alkylthioalkyl, wobei die vorgenannten Reste Z vorzugsweise in 3-Stellung in Bezug auf das Stickstoffatom stehen, n 0 bis 3, Y Alkylen, insbesondere Methylen, 1,1-1,2-Aethylen, wobei 1,2-Aethylen durch 1-2 niedere Alkylgruppen substituiert sein kann, und $R_4$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkanoyl, gegebenenfalls substituiertes Benzoyl, gegebenenfalls substituiertes 1,3,4-Oxadiazol-2-yl, 1,3,4-Thiadiazol-2-yl, 1,3,4-Triazol-3-yl oder 1,3,4-Triazol-1-yl bedeutet.

Als einzelne Vertreter solcher Halogenacetanilide seien beispielsweise die folgenden genannt:

N-Aethoxymethyl-N-chloracetyl-2-äthyl-6-methylanilin,

N-Chloracetyl-N-methoxymethyl-2,6-diäthylanilin,

N-Chloracetyl-N-(2-methoxyäthyl)-2,6-dimethylanilin,

N-(2-Allyloxyäthyl)-N-chloracetyl-2,6-dimethylanilin,
N-Chloracetyl-N-(2-n-propoxyäthyl)-2,6-dimethylanilin,
N-Chloracetyl-N-(2-isopropoxyäthyl)-2,6-dimethylanilin,
N-Chloracetyl-N-(2-methoxyäthyl)-2-äthyl-6-dimethylanilin,
N-Chloracetyl-N-(methoxyäthyl)-2,6-diäthylanilin,
N-(2-Aethoxyäthyl)-N-chloracetyl-2-äthyl-6-methylanilin,
N-Chloracetyl-N-(2-methoxy-1-methyläthyl)-2-methylanilin,
N-Chloracetyl-N-(2-methoxy-1-methyläthyl)-2,6-methylanilin,
N-Chloracetyl-N-(2-methoxy-1-methyläthyl)-2,6-diäthylanilin,
N-Chloracetyl-N-(2-methoxy-1-methyläthyl)-2-äthyl-6-methylanilin,
N-(2-Aethoxyäthyl)-N-chloracetyl-2,6-diäthylanilin,
N-Chloracetyl-N-(2-propoxyäthyl)-2-äthyl-6-methylanilin,
N-Chloracetyl-N-(2-propoxyäthyl)-2-diäthylanilin,
N-Chloracetyl-N-(2-isopropoxyäthyl)-2-äthyl-6-methylanilin,
N-Aethyloxycarbonylmethyl-N-chloracetyl-2,6-dimethylanilin,
N-Aethoxycarbonylmethyl-N-chloracetyl-2,6-diäthylanilin,
N-Chloracetyl-N-methoxycarbonylmethyl-2,6-dimethylanilin,
N-Chloracetyl-N-(2,2-diäthoxyäthyl)-2,6-dimethylanilin,
N-Chloracetyl-N-(2-methoxy-1-methyläthyl)-2,3-dimethylanilin,
N-(2-Aethoxyäthyl)-N-chloracetyl-2-methylanilin,
N-Chloracetyl-N-(2-methoxyäthyl)-2-methylanilin,
N-Chloracetyl-N-(2-methoxy-1-methyläthyl)-2,6-dimethylanilin,
N-(2-Aethoxy-2-methyläthyl)-N-chloracetyl-2-äthyl-6-methylanilin,
N-Chloracetyl-N-(1-äthyl-2-methoxyäthyl)-2,6-dimethylanilin,
N-Chloracetyl-N-(2-methoxyäthyl)-2-methoxy-6-methylanilin,
N-n-Butoxymethyl-N-chloracetyl-2-tert.-butylanilin,
N-(2-Aethoxyäthyl-methyläthyl)-2,6-dimethylanilin,
N-Chloracetyl-N-(2-methoxyäthyl)-2-chlor-6-methylanilin,
N-(2-Aethoxyäthyl)-N-chloracetyl-2-chlor-6-methylanilin,
N-(2-Aethoxyäthyl)-N-chloracetyl-2,3,6-trimethylanilin,
N-Chloracetyl-N-(2-methoxyäthyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-äthyl-6-methylanilin,
N-Chloracetyl-N-(1,3-dioxolan-2-ylmethyl)-2,6-dimethylanilin,
N-Chloracetyl-N-(1,3-dioxolan-2-ylmethyl)-2-äthyl-6-methylanilin,

N-Chloracetyl-N-(1,3-dioxan-2-ylmethyl)-2-äthyl-6-methylanilin,
N-Chloracetyl-N-(2-furanylmethyl)-2,6-dimethylanilin,
N-Chloracetyl-N-(2-furanylmethyl)-2-äthyl-6-methylanilin,
N-Chloracetyl-N-(2-tetrahydrofuranylmethyl)-2,6-methylanilin,
N-Chloracetyl-N-(N-propargylcarbamoylmethyl)-2,6-methylanilin,
N-Chloracetyl-N-(N,N-dimethylcarbamoylmethyl)-2,6-methylanilin,
N-(n-Butoxymethyl)-N-chloracetyl-2,6-diäthylanilin,
N-(2-n-Butoxyäthyl)-N-chloracetyl-2,6-diäthylanilin,
N-Chloracetyl-N-(2-methoxy-1,2-dimethyläthyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin,
N-Chloracetyl-N-(1H-pyrazol-1-ylmethyl)-2-äthyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diäthylanilin,
N-Benzoylmethyl-N-chloracetyl-2,6-dimethylanilin,
N-Benzoylmethyl-N-chloracetyl-2-äthyl-6-methylanilin,
N-Chloracetyl-N-(5-methyl-1,3,4-oxadiazol-2-yl)-2,6-diäthylanilin,
N-Chloracetyl-N-(5-methyl-1,3,4-oxadiazol-2-yl)-2-äthyl-6-methylanilin,
N-Chloracetyl-N-(5-methyl-1,3,4-oxadiazol-2-yl)-2-tert.butylanilin,
N-Chloracetyl-N-(4-chlorbenzoylmethyl)-2,6-dimethylanilin und
N-Chloracetyl-N-(1-methyl-5-methylthio-1,3,4-triazol-2-ylmethyl)-2,6-diäthylanilin

Weitere Halogenacetanilide, deren schädigende Wirkung auf Kulturpflanzen durch die neuen Acylamid-Derivate der Formel I aufgehoben werden kann, sind in R. Wegler, Chemie der Pflanzenschutz- und Schädlingsbekämpfungsmittel, Bd. 8, Seiten 90-93 und Seiten 322-327 aufgeführt.

Die Erfindung betrifft auch ein Verfahren zur selektiven Bekämpfung von Unkräutern in Kulturpflanzenbeständen, wobei die Kulturpflanzenbestände, teile der Kulturpflanzen oder Anbauflächen für Kulturpflanzen mit einem Herbizid und einer Verbindung der Formel I oder einem Mittel, welches diese Kombination enthält, behandelt werden.

Die die Herbizid/Antidot-Kombination enthaltenden Mittel bilden ebenfalls einen Bestandteil der vorliegenden Erfindung.

Bei den zu bekämpfenden Unkräutern kann es sich sowohl um monokotyle wie auch um dikotyle Unrkräuter handeln.

Für die Verwendung von Verbindungen der Formel I oder sie enthaltender Mittel zum Schützen von Kulturpflanzen gegen schädigende Wirkungen von Agrarchemikalien kommen verschiedene Methoden und Techniken in Betracht, wie beispielsweie die folgenden:

i) <u>Samenbeizung</u>

a) Beizung der Samen mit einem als Spritzpulver formulierten Wirkstoff durch Schütteln in einem Gefäss bis zur gleichmässigen Verteilung auf der Samenoberfläche (Trockenbeizung). Man verwendet dabei etwa 10 bis 500 g Wirkstoff der Formel I (40 g bis 2 kg Spritzpulver) pro 100 kg Saatgut.

b) Beizung der Samen mit einem Emulsionskonzentrat des Wirkstoffs der Formel I nach der Methode a) (Nassbeizung).

c) Beizung durch Tauchen des Saatguts in eine Brühe mit 50-5000 ppm Wirkstoff der Formel I während 1 bis 72 Stunden und gegebenenfalls nachfolgendes Trocknen der Samen (Tauchbeizung).

Die Beizung des Saatguts oder die Behandlung des angekeimten Sämlings sind naturgemäss die bevorzugten Methoden der Applikation, weil die Wirkstoffbehandlung vollständig auf die Zielkultur gerichtet ist. Man verwendet in der Regel 10 g bis 500 g, vorzugsweise 50 bis 250 g AS pro 100 kg Saatgut, wobei man je nach Methodik, die auch den Zusatz anderer Wirkstoffe oder Mikronährstoffe ermöglicht, von den angegebenen Grenzkonzentrationen nach oben oder unter abweichen kann (Wiederholungsbeize).

ii) Applikation aus Tankmischung

Eine flüssige Aufarbeitung eines Gemisches von Gegenmittel und Herbizid (gegenseitiges Mengenverhältnis zwischen 10:1 und 1:30) wird verwendet, wobei die Aufwandmenge an Herbizid 0,1 bis 10 kg pro Hektar beträgt. Solche Tankmischung wird vorzugsweise vor oder unmittelbar nach der Aussaat appliziert oder 5 bis 10 cm tief in den noch nicht gesäten Boden eingearbeitet.

iii) Applikation in die Saatfurche

Das Gegenmittel wird als Emulsionskonzentrat, Spritzpulver oder als Granulat in die offene besäte Saatfurche eingebracht und hierauf wird nach dem Decken der Saatfurche in normaler Weie das Herbizid im Vorauflaufverfahren appliziert.

iv) Kontrollierte Wirkstoffabgabe

Der Wirkstoff wird in Lösung auf mineralische Granulatträger oder polymerisierte Granulate (Harnstoff/Formaldehyd) aufgezogen und trocknen gelassen. Gegebenenfalls kann ein Ueberzug aufgebracht wereden (Umhüllungsgranulate), der es erlaubt, den Wirkstoff über einen bestimmten Zeitraum dosiert abzugeben.

Die Verbindungen der Formel I werden in unveränderter Form oder vorzugsweise als Mittel zusammen mit den in der Formulierungstechnik üblichen Hilfsmitteln eingesetzt und werden daher z.B. zu Emulsionskonzentraten, direkt verprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I sowie das Gegenmittel und gegebenenfalls einen festen oder flüssigen Zusatzstoff enthaltenden Mittel, Zubereitungen oder Zusammensetzungen werden in bekannter Weise hergestellt, z.B. durch inniges Vermischen

und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegegebenenfalls epoxidiertes Pflanzenöl wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Oxtylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben:

"1985 International Mc Cutcheon's Emulsifier & Detergents"; Glenn Rock, NJ 07452 USA

H. Stache "Tensid-Taschenbuch", 2. Aufl., C. Hanser Verlag, München, Wien 1981

M. and J. Ash, "Encyclopedia of Surfactants" Vol. I-III, Chemical Publishing Co., New York, 1980-1981.

Die Wirkstoffzubereitungen enthalten in der Regel 0,1 bis 99 %, insbesondere 0,1 bis 80 %, Wirkstoff der Formel I, 1 bis 99 % eines festen oder flüssigen Zusatzstoffes und 0 bis 25 %, insbesonders 0,1 bis 25 %, eines Tensides.

Insbesondere setzen sich bevorzugte Formulierungen folgendermassen zusammen: (% = Gewichtsprozent)

Emulgierbare Konzentrate

| | |
|---|---|
| Wirkstoffe der Formeln I und II | 1 bis 50 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 %. |

Stäube

| | |
|---|---|
| Aktiver Wirkstoff: | 0,1 bis 10 %, vorzugsweise 0,1 bis 1 % |
| festes Trägermaterial: | 99,9 bis 90 %, vorzugsweise 99,9 bis 99 %. |

Suspensions-Konzentrat

| | |
|---|---|
| Wirkstoffgemisch: | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |

Benetzbare Pulver

| | |
|---|---|
| Wirkstoffgemisch : | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzgusweise 15 bis 90 %. |

Granulate

| | |
|---|---|
| Wirkstoffgemisch: | 0,5 bis 30 %, vorzugsweise 3 bis 15 % |
| festes Trägermittel: | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,01 bis 10 kg/ha, vorzugsweise 0,025 bis 5 kg/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

In den folgenden Beispielen sind die Temperaturen in Celsiusgraden °C, die Drücke in Millibar mb angegeben.

Herstellungsbeispiele

Beispiel 1: Herstellung von N-(1-Methyl-tetrahydroisochinolin)-dichloracetamid (Verbindung 1.01)

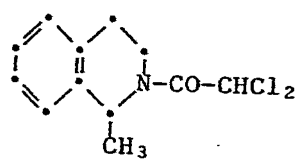

In einen 350 ml Vierhalskolben gibt man 14,7 g 1-Methyl-tetrahydroisochinolin und 60 ml Toluol und rührt bis sich das Isochinolin gelöst hat. Dazu gibt man 20 g 20 %ige Natronlauge und rührt unter Kühlung des Kolbens im $CO_2$/Alkohol-Bad bis die Temperatur der Reaktionslösung -15° erreicht hat. Dann tropft man langsam in die gerührte Aminlösung eine 14,8 g Dichloessigsäurechlorid welche in 10 ml Toluol gelöst sind. Nachdem alles zugetropft ist, was ca. 1/2 Stunde in Anspruch nimmt, wird das Kühlbad entfernt und das Reaktionsgemisch weitergerührt bis es Raumtemperatur erreicht hat. Dann wird es auf Eis/Wasser gegossen und die organische Schicht im Schedetrichter mit Toluol extrahiert. Die Toluoolphasen werden gesammelt, je zweimal mit 1n-Salzsäure und Wasser gewaschen, getrocknetund im Vakuum eingedampft. Es hinterbleibt ein helles Oel,

das sich über Nacht festigt. Ausbeute 23,8 g Smp. 74-77°. Dieses Rohmaterial wird in 25 g Toluol werm gelöst, dann eiskalt gestellt und langsam mit 60 ml Hexan versetzt, wobei das Kondensationsprodukt kristallin ausfällt. Man erhält so 19,6 g Titelprodukt mit Schmelzpunkt 79-80°.

Analyse $C_{12}H_{13}Cl_2NO$

| | | | | |
|---|---|---|---|---|
| ber. | C 55,83 % | H 5,08 % | N 5,43 % | Cl 27,47 % |
| gef. | C.55,80 % | H 5,10 % | N 5,30 % | Cl 27,50 % |

Beispiel 2: Herstellung von N-(6,7-Di-methoxy-tetrahydroisochinolin)-dichloracetamid (Verbindung 1.02)

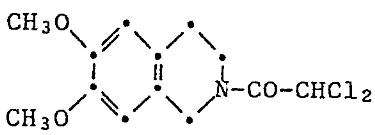

23 g 6,7-Di-methoxy-tetrahydroisochinolin-chlorhydrat (Schmp. 261°) werden in 70 ml Toluol suspendiert. Dazu gibt man eine Lösung von 8 g NaOH in 40 ml Wasser wobei sich das Reaktionsgemisch auf 40° erwärmt und die freie Isochinolin-Base ausfällt. Es wird auf -15° abgekühlt und langsam bei dieser Temperatur eine Lösung von 14,7 g Dichloracetylchlord in 15 ml Toluol zugetropft. Das ausgefällte Produkt wird abgenutscht, mit Wasser und 1n-HCl gewaschen, dann nochmals mit Wasser und anschliessend mit Hexan gewaschen und im Vakuum bei 40° getrocknet. Man erhält so 15,5 g Rohprodukt mit einem Schmelzpunkt von 122-125°. Dieses wird in 75 ml Alkohol heiss gelöst, mit 25 mml Pentan versetzt. Beim Abkühlen kristallisiert das Produkt aus. Man erhält so 13,9 g Titelprodukt mit einem Schmelzpunkt von 122-123°.

Analyse $C_{13}H_{15}Cl_2NO_3$ Mol.-Gew. 304,17

| | | | | |
|---|---|---|---|---|
| berechnet: | C 51,34 % | H 4,97 % | N 4,61 % | Cl 23,31 % |
| gefunden: | C 51,50 % | H 5,00 % | N 4,60 % | Cl 23,30 % |

In gleicher Weise werden N-(1-Aethyl-tetrahydro-iso-chinolin)dichloracatamid als dickes helles Oel im N-(1-Isopropyl-tetrahydroisochinolin)dichloracetamid als dickes helles Oel hergestellt.

Weitere auf diese Weise herzustellende Verbindungen sind in der folgenden Tabelle aufgeführt:

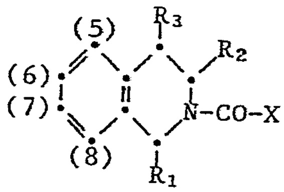

Tabelle 1

| Verb. No. | $R_1$ | $R_2$ | $R_3$ | (5) | (6) | (7) | (8) | X | phys. Daten |
|---|---|---|---|---|---|---|---|---|---|
| 1.01 | $CH_3$ | H | H | H | H | H | H | $CH_2Cl_2$ | Smp. 79-80°C |
| 1.02 | H | H | H | H | $CH_3O$ | $CH_3O$ | H | $CH_2Cl_2$ | Smp. 122-123°C |
| 1.03 | $CH_3$ | $CH_3$ | H | H | H | H | H | $CHCl_2$ | Smp. 168-170°C |
| 1.04 | H | H | H | H | H | Cl | Cl | $CHCl_2$ | -- |
| 1.05 | H | H | H | H | H | $CH_3-O$ | H | $CHCl_2$ | -- |
| 1.06 | H | H | H | $CH_3-O$ | H | $CH_3-O$ | H | $CHCl_2$ | -- |
| 1.07 | H | H | H | H | H | $C_2H_5-O$ | H | $CHCl_2$ | -- |
| 1.08 | H | H | H | H | 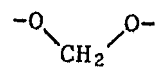 | | H | $CHCl_2$ | -- |
| 1.09 | H | H | H | H | H | $CF_3$ | H | $CHCl_2$ | -- |
| 1.10 | $CH_3$ | H | H | H | H | $CH_3$ | H | $CHCl_2$ | -- |
| 1.11 | H | H | H | H | H | Cl | H | $CHCl_2$ | -- |
| 1.12 | H | H | H | H | H | $CH_3$ | Cl | $CHCl_2$ | -- |
| 1.13 | $C_2H_5$ | H | H | H | H | H | H | $CHCl_2$ | Oel |
| 1.14 | 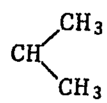 | H | H | H | H | H | H | $CHCl_2$ | Oel |
| 1.15 | $C_2H_5$ | H | H | H | H | H | H | $-CH_2Cl$ | Oel |
| 1.16 | $CH_3$ | H | H | H | H | H | H | $-CH_2Cl$ | Oel |
| 1.17 | H | H | H | $CH_3-O$ | $CH_3-O$ | $CH_3-O$ | H | $-CH-Cl_2$ | -- |
| 1.18 | H | H | H | H | $CH_3-O$ | $CH_3-O$ | H | $-CH_2Cl$ | Fp. 115-116°C |

Tabelle 1 (Fortsetzung)

| Verb. No. | $R_1$ | $R_2$ | $R_3$ | (5) | (6) | (7) | (8) | X | phys. Daten |
|---|---|---|---|---|---|---|---|---|---|
| 1.19 | H | H | H | H | $CH_3$-O | $CH_3$-O | H | -CH($CH_3$)-Cl | -- |
| 1.20 | H | H | H | H | $CH_3$-O | $C_2H_5O$ | H | -CH-$Cl_2$ | -- |
| 1.21 | $C_2H_5$ | H | H | H | H | H | H | -CH($CH_3$)-Cl | -- |
| 1.22 | $CH_3$ | H | H | H | H | H | H | -CH($CH_3$)-Cl | Oel |
| 1.23 | H $(CH_3)_2$ | H | H | H | H | H | H | -CH-$Cl_2$ | Oel |

Formulierungsbeispiele für Wirkstoffe der Formel I oder Mischungen dieser Wirkstoffe mit Herbiziden

Beispiel 3: Spritzpulver

| | a) | b) | c) |
|---|---|---|---|
| Wirkstoff der Formel I oder Mischung mit Herbizid | 20 % | 60 % | 0,5 % |
| Na-Ligninsulfonat | 5 % | 5 % | 5 % |
| Na-Laurylsulfat | 3 % | - | - |
| Na-Diisobutylnaphthalinsulfonat | - | 6 % | 6 % |
| Octylphenolpolyäthylenglykol-äther /7-8 Mol AeO) | - | 2 % | 2 % |
| Hochdisperse Kieselsäure | 5 % | 27 % | 27 % |
| Kaolin | 67 % | - | - |
| Natriumchlorid | - | - | 59,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

Beispiel 4: Emulsion-Konzentrat

| | a) | b) |
|---|---|---|
| Wirkstoff der Formel I oder Mischung mit Herbizid | 10 % | 1 % |
| Octylphenolpolyäthylenglykol-äther (4-5 Mol AeO) | 3 % | 3 % |
| Ca-Dodecylbenzolsulfonat | 3 % | 3 % |
| Ricinusölpolyglykoläther (36 Mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

**Beispiel 5:** Stäubemittel

| | a) | b) |
|---|---|---|
| Wirkstoff der Formel I oder Mischung mit dem Herbizid der Formel I | 0,1 % | 1 % |
| Talkum | 99,9 % | - |
| Kaolin | - | 99 % |

Man erhält anwendungsfertige Stäubemittel, indem der Wirkstoff mit dem Träger vermischt und auf einer geeigneten Mühle vermahlen wird.

**Beispiel 6:** Extruder Granulat

| | a) | b) |
|---|---|---|
| Wirkstoff der Formel II oder Mischung mit dem Herbizid der Formel I | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

**Beispiel 7:** Umhüllungs-Granulat

| | |
|---|---|
| Wirkstoff der Formel II oder Mischung mit dem Herbizid der Formel I | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

**Beispiel 8:** Suspensions-Konzentrat

| | a) | b) |
|---|---|---|
| Wirkstoff der Formel II oder Mischung mit dem Herbizid der Formel I | 40 % | 5 % |
| Aethylenglykol | 10 % | 10 % |
| Nonylphenolpolyäthylenglykoläther (15 MOl AeO) | 6 % | 1 % |

| | | |
|---|---|---|
| Na-Ligninsulfonat | 10 % | 5 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 9: Salzlösung

| | |
|---|---|
| Wirkstoff der Formel II oder Mischung mit dem Herbizid der Formel I | 5 % |
| Isopropylamin | 1 % |
| Octylphenolpolyäthylenglykoläther (78 Mol AeO) | 3 % |
| Wasser | 91 %. |

Biologische Beispiele

Die Fähigkeit der Verindungen der Formel I, Kulturpflanzen vor der phytotoxischen Wirkung starker Herbizide zu schützen, kann aus dem folgenden Beispiel ersehen werden. In der Versuchsbeschreibung werden die Verbindungen der Formel I als Safener oder Gegenmittel (Antidot) bezeichnet.

Zur Bestimmung der Schutzwirkung des Safeners wird die Schädigung an der Pflanze in einem linearen neunstufigen Bonitierungsschema bewertet, wobei 1 für 100 % Schädigung und 9 für keine Schädigung (Pflanze wächst wie die unbehandelte Referenz) steht. Das Herbizid wird in einer Aufwandmenge appliziert, in welcher die Versuchspflanze teilweise geschädigt wird (d.i. zwischen 0 und 100 %). Zur Bewertung der Safenerwirkung wird die sogenannte rel. Safenerwirkung

ermittelt. Dies ist die Differenz der bei dem Herbizid und Herbizid + Safener ermittelten Bonitiernoten. Die realtive Safenerwirkung wird in Prozent angegeben.

Beispiel 10: Vorauflaufapplikation von Safener und Herbizid in Tankmischung

Plastiktöpfe (oberer Durchmesser 9 cm, Inhalt 315 ccm) werden mit sandig toniger Lehmerde gefüllt. Maissamen der Sorte 'LG-5' werden eingesät und mit Erde bedeckt und anschliessend angegossen.

Die als Safener zu prüfende Substanz der Formel I wird in einer Aufwandmenge von 1,5 kg AS/ha entsprechenden Konzentration in Wasser gelöst und zusammen mit dem Herbizid der Formel II in 550 l Brühe/ha auf die Bodenoberfläche aufgesprüht.

Als Herbizid wird Metolachlor der Formel

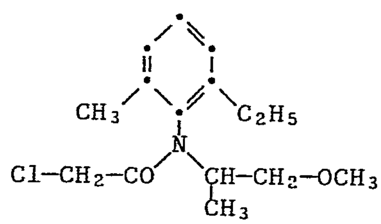

entsprechend einer Aufwandmenge von 8 kg/ha der Spritzbrühe beigemischt.

Die Testpflanzen werden im Gewächshaus kultiviert bei 13 Std. Licht (24-26°C) und 11 Std. Dunkel (20-22°C) und einer relativen Luftfeuchtigkeit von ca. 40-60 %.
Zwei Wochen nach Saat und Applikation wird die Schutzwirkung des Safeners in % bonitiert. Als Referenz dienen dabei Pflanzen, welche nur mit dem Herbizid behandelt sind, sowie vollständig unbehandelte Kontrollen.

Die Ergebnisse sind in nachfolgender Tabelle zusammengefasst.

Tabelle 2

| Verb. No. | rel. Schutzwirkung in % im Vergleich zum Herbizid allein |
|---|---|
| 1.01 | 62,5 |
| 1.02 | 12,5 |
| 1.03 | 12,5 |
| 1.14 | 75,0 |
| 1.15 | 62,5 |
| 1.16 | 50,0 |
| 1.17 | 25,0 |

Beispiel 11: Versuch mit Antidot und Herbizid in Hirse im Vorauflaufverfahren. Applikation der Antidote durch Samenbeizung.

Hirsesamen der Sorte Funk G 522 werden mit dem Antidot in einem Glaskolben zusammengegeben. Samen und Produkt werden durch Schütteln und Rotation des Glaskoblens gut durchgemischt. Anschliessend wird der so gebeizte Samen in einem mit sandiger Erde gefüllten Plasticcontainer (25 x 17 $cm^2$ Bodenfläche, 12 cm hoch) eingesät. Der Samen wird mit einer dünnen Erdschicht bedeckt. Darauf wird nun eine wässrige Herbizidemulsion in der gewünschten Applikationsmenge gesprüht. Der Zustand der Pflanzen wird 21 Tage nach der Behandlung evakuiert und die Schutzwirkung des Gegenmittels in Prozent ausgewertet. Als Referenz dienten dabei die mit dem Herbizid allein behandelten Pflanzen (keine Schutzwirkung) sowie unbehandelte Kontrollpflanzen (nochmals Wachstum = 100%ige Schutzwirkung).

Die geprüften Verbindungen verringern die Schadwirkung des Herbizides.

Patentansprüche für alle Vertragsstaaten ausser AT und ES

1. Ein Mittel zum Schützen von Kulturpflanzen von der phytotoxischen Wirkung von herbizid wirksamen Halogenacetaniliden, dadurch gekennzeichnet, dass es neben inerten Trägermaterial und gegebenenfalls dem Halogenacetanilid, als antagonisierendem Wirkstoff ein halogenacyliertes 1,2,3,4-Tetrahydroisochinolin der Formel I enthält,

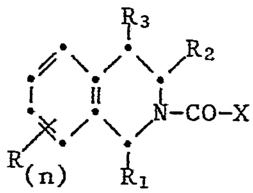

(I)

worin

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und

X $C_1$-$C_6$-Halogenalkyl oder $C_2$-$C_6$-Halogenalkenyl bedeuten,

mit der Massgabe, dass wenn R Wasserstoff bedeutet $R_1$, $R_2$ und $R_3$ nicht ebenfalls Wasserstoff sein dürfen.

2. Mittel gemäss Anspruch 1, dadurch gekennzeichnet, dass im Acylamidderivat der Formel I X für $C_1$-$C_3$-Halogenalkyl steht, während die übrigen Substituenten die im Anspruch 1 gegebene Bedeutung haben.

3. Mittel gemäss Anspruch 2, dadurch gekennzeichnet, dass im Acylamidderivat der Formel I für $R_1$ $C_1$-$C_4$-Alkyl und für X $C_1$-$C_3$-Halogenakyl stehen, während die übrigen Substituenten die im Anspruch 1 gegebene Bedeutung haben.

4. Mittel gemäss Anspruch 3, dadurch gekennzeichnet, dass im Acylamidderivat der Formel I für $R_1$ $C_1$-$C_4$-Alkyl und für $R_2$, $R_3$ und R Wasserstoff stehen, während X $C_1$-$C_2$-Halogenalkyl bedeuten.

5. Mittel gemäss Anspruch 2, dadurch gekennzeichnet, dass im Acylamidderivat der Formel I für R $C_1$-$C_4$-Alkoxy bzw. $C_2$-$C_4$-Alkenyloxyreste stehen, wähend $R_1$, $R_2$, $R_3$ Wasserstoff und X $C_1$-$C_2$-Halogenalkylreste bedeuten.

6. Mittel gemäss Anspruch 5, dadurch gekennzeichnet, dass im Acylamidderivat der Formel I für R 6,7-Di-methoxy steht, während $R_1$, $R_2$, $R_3$ Wasserstoff und X $C_1$-$C_2$-Halogenalkyl bedeuten.

7. Mittel gemäss Anspruch 2, dadurch gekennzeichnet, dass im Acylamidderivat der Formel I für R Halogen steht, während $R_1$, $R_2$, $R_3$ Wasserstoff und X $C_1$-$C_2$-Halogenalkyl bedeuten.

8. Mittel gemäss Anspruch 2, dadurch gekennzeichnet, dass im Acylamidderivat der Formel I für R Dioxymethylen (Methylendioxy) steht während $R_1$, $R_2$, $R_3$ Wasserstoff und X $C_1$-$C_2$-Halogenalkyl bedeuten.

9. Mittel gemäss Anspruch 7, dadurch gekennzeichnet, dass R für Chlor und n für 2 steht, während $R_1$, $R_2$, $R_3$ Wasserstoff und X $C_1$-$C_2$-Halogenalkyl bedeuten.

10. Mittel gemäss Anspruch 2, dadurch gekennzeichnet, dass im Acylamidderivat der Formel I für R Trifluormethyl steht, während $R_1$, $R_2$, $R_3$ Wasserstoff und X $C_1$-$C_2$-Halogenalkyl bedeuten.

11. Mittel gemäss einem der Ansprüche 1 bis 10 enthaltend als Verbindung der Formel I
2-Dichloracetyl-1,2,3,4-tetrahydroisochinolin,
2-Dichloracetyl-1-methyl-1,2,3,4-tetrahydroisochinolin,
2-Dichloracetyl-1-aethyl-1,2,3,4-tetrahydroisochinolin,
2-Dichloracetyl-1-isopropyl-1,2,3,4-tetrahydroisochinolin,
2-Dichloracetyl-1,3-dimethyl-1,2,3,4-tetrahydroisochinolin,
2-Dichloracetyl-6,7-dimethoxy-1,2,3,4-tetrahydroisochinolin,
2-Dichloracetyl-3-ethyl-1,2,3,4-tetrahydroisochinolin

oder

2-Dichloracetyl-4-ethyl-1,2,3,4-tetrahydroisochinolin.

12. Ein Mittel gemäss einem der Ansprüchen 1 bis 11 zum Schützen von Kulturpflanzen gegen die phytotoxische Wirkung herbizider Halogenacetanilide der Formel IV

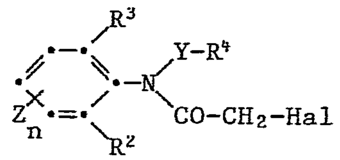

(IV).

worin

Hal Halogen,

$R^2$ und $R^3$ unabhängig voneinander Wasserstoff, Halogen, niederes Alkyl, Alkoxy, Alkylthio, Halogenalkyl, Alkoxyalkyl oder Alkylthioalkyl, Z Wasserstoff, Halogen, niederes Alkyl, Alkoxy, Alkylthio, Halogenalkyl, Alkoxyalkyl oder Alkylthioalkyl bedeutet, wobei die vorgenannten Reste Z vorzugsweise in 3-Stellung in Bezug auf das Stickstoffatom stehen und n 0 bis 3, Y gegebenenfalls bis zu zweifach durch $C_1$-$C_4$-Alkyl substituiertes $C_1$-$C_4$-Alkylen, und $R^4$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkanoyl, gegebenenfalls substituiertes Benzoyl, gegebenenfalls substituiertes 1,3,4-Oxadiazol-2-yl, 1,3,4-Thiadiazol-2-yl, 1,3,4-Triazol-3-yl oder 1,3,4-Triazol-1-yl bedeutet.

13. Ein Mittel gemäss Anspruch 12 zum Schützen von Kulturpflanzen gegen die phytotoxische Wirkung folgender herbizider Chloracetanilide:

N-Aethoxymethyl-N-chloracetyl-2-äthyl-6-methylanilin,

N-Chloracetyl-N-methoxymethyl-2,6-diäthylanilin,

N-Chloracetyl-N-(2-methoxyäthyl)-2,6-dimethylanilin,

N-(2-Allyloxyäthyl)-N-chloracetyl-2,6-dimethylanilin,

N-Chloracetyl-N-(2-n-propoxyäthyl)-2,6-dimethylanilin,

N-Chloracetyl-N-(2-isopropoxyäthyl)-2,6-dimethylanilin,

N-Chloracetyl-N-(2-methoxyäthyl)-2-äthyl-6-dimethylanilin,
N-Chloracetyl-N-(methoxyäthyl)-2,6-diäthylanilin,
N-(2-Aethoxyäthyl)-N-chloracetyl-2-äthyl-6-methylanilin,
N-Chloracetyl-N-(2-methoxy-1-methyläthyl)-2-methylanilin,
N-Chloracetyl-N-(2-methoxy-1-methyläthyl)-2,6-methylanilin,
N-Chloracetyl-N-(2-methoxy-1-methyläthyl)-2,6-diäthylanilin,
N-Chloracetyl-N-(2-methoxy-1-methyläthyl)-2-äthyl-6-methylanilin,
N-(2-Aethoxyäthyl)-N-chloracetyl-2,6-diäthylanilin,
N-Chloracetyl-N-(2-propoxyäthyl)-2-äthyl-6-methylanilin,
N-Chloracetyl-N-(2-propoxyäthyl)-2-diäthylanilin,
N-Chloracetyl-N-(2-isopropoxyäthyl)-2-äthyl-6-methylanilin,
N-Aethyloxycarbonylmethyl-N-chloracetyl-2,6-dimethylanilin,
N-Aethoxycarbonylmethyl-N-chloracetyl-2,6-diäthylanilin,
N-Chloracetyl-N-methoxycarbonylmethyl-2,6-dimethylanilin,
N-Chloracetyl-N-(2,2-diäthoxyäthyl)-2,6-dimethylanilin,
N-Chloracetyl-N-(2-methoxy-1-methyläthyl)-2,3-dimethylanilin,
N-(2-Aethoxyäthyl)-N-chloracetyl-2-methylanilin,
N-Chloracetyl-N-(2-methoxyäthyl)-2-methylanilin,
N-Chloracetyl-N-(2-methoxy-1-methyläthyl)-2,6-dimethylanilin,
N-(2-Aethoxy-2-methyläthyl)-N-chloracetyl-2-äthyl-6-methylanilin,
N-Chloracetyl-N-(1-äthyl-2-methoxyäthyl)-2,6-dimethylanilin,
N-Chloracetyl-N-(2-methoxyäthyl)-2-methoxy-6-methylanilin,
N-n-Butoxymethyl-N-chloracetyl-2-tert.-butylanilin,
N-(2-Aethoxyäthyl-methyläthyl)-2,6-dimethyl-N-chloracetylanilin,
N-Chloracetyl-N-(2-methoxyäthyl)-2-chlor-6-methylanilin,
N-(2-Aethoxyäthyl)-N-chloracetyl-2-chlor-6-methylanilin,
N-(2-Aethoxyäthyl)-N-chloracetyl-2,3,6-trimethylanilin,
N-Chloracetyl-N-(2-methoxyäthyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-äthyl-6-methylanilin,
N-Chloracetyl-N-(1,3-dioxolan-2-ylmethyl)-2,6-dimethylanilin,
N-Chloracetyl-N-(1,3-dioxolan-2-ylmethyl)-2-äthyl-6-methylanilin,
N-Chloracetyl-N-(1,3-dioxan-2-ylmethyl)-2-äthyl-6-methylanilin,
N-Chloracetyl-N-(2-furanylmethyl)-2,6-dimethylanilin,
N-Chloracetyl-N-(2-furanylmethyl)-2-äthyl-6-methylanilin,

N-Chloracetyl-N-(2-tetrahydrofuranylmethyl)-2,6-methylanilin,
N-Chloracetyl-N-(N-propargylcarbamoylmethyl)-2,6-methylanilin,
N-Chloracetyl-N-(N,N-dimethylcarbamoylmethyl)-2,6-methylanilin,
N-(n-Butoxymethyl)-N-chloracetyl-2,6-diäthylanilin,
N-(2-n-Butoxyäthyl)-N-chloracetyl-2,6-diäthylanilin,
N-Chloracetyl-N-(2-methoxy-1,2-dimethyläthyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin,
N-Chloracetyl-N-(1H-pyrazol-1-ylmethyl)-2-äthyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diäthylanilin,
N-Benzoylmethyl-N-chloracetyl-2,6-dimethylanilin,
N-Benzoylmethyl-N-chloracetyl-2-äthyl-6-methylanilin,
N-Chloracetyl-N-(5-methyl-1,3,4-oxadiazol-2-yl)-2,6-diäthylanilin,
N-Chloracetyl-N-(5-methyl-1,3,4-oxadiazol-2-yl)-2-äthyl-6-methylanilin,
N-Chloracetyl-N-(5-methyl-1,3,4-oxadiazol-2-yl)-2-tert.butylanilin,
N-Chloracetyl-N-(4-chlorbenzoylmethyl)-2,6-dimethylanilin oder
N-Chloracetyl-N-(1-methyl-5-methylthio-1,3,4-triazol-2-ylmethyl)-2,6-diäthylanilin

14. 1,2,3,4-Tetrahydroisochinoline der Formel I

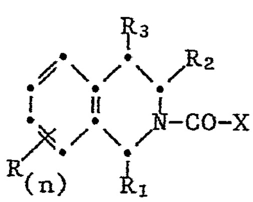

(I)

worin

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und

X $C_1$-$C_6$-Halogenalkyl oder $C_2$-$C_6$-Halogenalkenyl bedeuten,

mit der Massgabe, dass folgende Verbindungen nicht mit umfasst sind:
2-Dichloracetyl-1,2,3,4-tetrahydroisochinolin,
2-Dichloracetyl-1-methyl-1,2,3,4-tetrahydroisochinolin,
2-Dichloracetyl-1-aethyl-1,2,3,4-tetrahydroisochinolin,
2-Dichloracetyl-1-isopropyl-1,2,3,4-tetrahydroisochinolin,
2-Dichloracetyl-1,3-dimethyl-1,2,3,4-tetrahydroisochinolin,
2-Dichloracetyl-6,7-dimethoxy-1,2,3,4-tetrahydroisochinolin,
2-Dichloracetyl-3-ethyl-1,2,3,4-tetrahydroisochinolin
und
2-Dichloracetyl-4-ethyl-1,2,3,4-tetrahydroisochinolin.

15. Verfahren zur Herstellung von 1,2,3,4-Tetrahydroisochinolinen der Formel I, gemäss Anspruch 14 dadurch gekennzeichnet, dass man ein Acylderivat der Formel II

$$X-CO-Q \qquad (II)$$

bzw. dessen Anhydrid, worin Q Chlor oder Brom oder den Rest -O-CO-X bedeutet und X die im Anspruch 1 gegebene Bedeutung haben, in einem inerten organischen Lösungsmittel, in Gegenwart der mindestens äquimolaren Menge eines säurebindenden Mittels, mit einem 1,2,3,4-Tetrahydroisochinolin der Formel III umsetzt

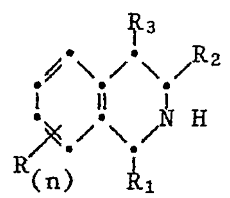

(III)

worin $R_{(n)}$, $R_1$, $R_2$, $R_3$ die unter Formel I Anspruch 14 gegebene Bedeutung haben.

16. Verfahren zur Herstellung von 1,2,3,4-Tetrahydroisochinolinen der Formel I

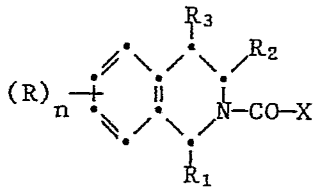

(I)

worin

X $CHCl_2$

und

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3 und

$R_1$, $R_2$ und $R_3$ je Wasserstoff, $C_1$-$C_6$-Alkyl oder $C_3$-$C_6$-Alkenyl bedeuten, dadurch gekennzeichnet, dass man ein 1,2,3,4-Tetrahydroisochinolin der Formel III

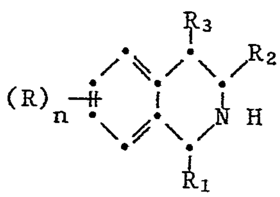

(III)

worin $R_{(n)}$, $R_1$, $R_2$ und $R_3$ wie zuvor definiert sind, mit Choral oder einem durch Addition an dessen Oxogruppe gebildetem Chloralderivat in einem wässrigen Medium, und/oder einem polaren organischen Lösungsmittel, in Gegenwart säurebindender Mittel und der katalytisch wirkenden Menge eines anorganischen oder organischen Cyanides umsetzt.

17. Verwendung eines Mittels gemäss einem der Ansprüche 1 bis 13 zum Schützen von Kulturpflanzen gegen die phytotoxische Wirkung herbizider Halogenacetanilide.

18. Verfahren zur selektiven Bekämpfung von Unkräutern in Nutzpflanzenkulturen, dadurch gekennzeichnet, dass man die Kulturpflanzen oder deren Anbaufläche sowohl mit einem herbizid wirksamen Halogenacetanilid gemäss Anspruch 12 oder 13, als auch mit einer wirksamen Menge eines Acylamidderivates der Formel I gemäss einem der Ansprüche 1 bis 11 als Gegenmittel behandelt.

19. Verwendung der Acylamidderivate der Formel I gemäss Anspruch 17 zum Schützen von Mais gegen die schädigende Wirkung herbizid wirksamer Halogenacetanilide.

20. Verfahren zum Schützen von Kulturpflanzen von Schäden, die bei der Applikation von Halogenacetanilid Herbiziden gemäss Anspruch 12 oder 13 auftreten, dadurch gekennzeichnet, dass man entweder die Anbaufläche für die Pflanze vor oder während der Applikation des Herbizides oder den Samen oder die Stecklinge an Pflanzen, oder die Pflanze selbst mit einer wirksamen Menge eines Acylamidderivates der Formel I gemäss einem der Ansprüche 1 bis 11 behandelt.

21. Saatgut von Nutzpflanzen, das mit einer antagonistisch wirksamen Menge eines Acylamidderivates der Formel 1 gemäss einem der Ansprüche 1 bis 11 behandelt worden ist.

FO 7.5 HH/sm*

Patentansprüche für die Vertragsstaaten AT und ES

1. Ein Mittel zum Schützen von Kulturpflanzen von der phytotoxischen Wirkung von herbizid wirksamen Halogenacetaniliden, dadurch gekennzeichnet, dass es neben inerten Trägermaterial und gegebenenfalls dem Halogenacetanilid, als antagonisierendem Wirkstoff ein halogenacyliertes 1,2,3,4-Tetrahydroisochinolin der Formel I enthält,

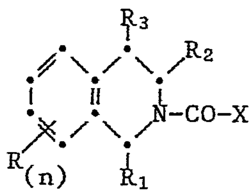

(I)

worin

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und

X $C_1$-$C_6$-Halogenalkyl oder $C_2$-$C_6$-Halogenalkenyl bedeuten,

mit der Massgabe, dass wenn R Wasserstoff bedeutet $R_1$, $R_2$ und $R_3$ nicht ebenfalls Wasserstoff sein dürfen.

2. Mittel gemäss Anspruch 1, dadurch gekennzeichnet, dass im Acylamidderivat der Formel I X für $C_1$-$C_3$-Halogenalkyl steht, während die übrigen Substituenten die im Anspruch 1 gegebene Bedeutung haben.

3. Mittel gemäss Anspruch 2, dadurch gekennzeichnet, dass im Acylamidderivat der Formel I für $R_1$ $C_1$-$C_4$-Alkyl und für X $C_1$-$C_3$-Halogenakyl stehen, während die übrigen Substituenten die im Anspruch 1 gegebene Bedeutung haben.

4. Mittel gemäss Anspruch 3, dadurch gekennzeichnet, dass im Acylamidderivat der Formel I für $R_1$ $C_1$-$C_4$-Alkyl und für $R_2$, $R_3$ und R Wasserstoff stehen, während X $C_1$-$C_2$-Halogenalkyl bedeuten.

5. Mittel gemäss Anspruch 2, dadurch gekennzeichnet, dass im Acylamidderivat der Formel I für R $C_1$-$C_4$-Alkoxy bzw. $C_2$-$C_4$-Alkenyloxyreste stehen, wähend $R_1$, $R_2$, $R_3$ Wasserstoff und X $C_1$-$C_2$-Halogenalkylreste bedeuten.

6. Mittel gemäss Anspruch 5, dadurch gekennzeichnet, dass im Acylamidderivat der Formel I für R 6,7-Di-methoxy steht, während $R_1$, $R_2$, $R_3$ Wasserstoff und X $C_1$-$C_2$-Halogenalkyl bedeuten.

7. Mittel gemäss Anspruch 2, dadurch gekennzeichnet, dass im Acylamidderivat der Formel I für R Halogen steht, während $R_1$, $R_2$, $R_3$ Wasserstoff und X $C_1$-$C_2$-Halogenalkyl bedeuten.

8. Mittel gemäss Anspruch 2, dadurch gekennzeichnet, dass im Acylamidderivat der Formel I für R Dioxymethylen (Methylendioxy) steht während $R_1$, $R_2$, $R_3$ Wasserstoff und X $C_1$-$C_2$-Halogenalkyl bedeuten.

9. Mittel gemäss Anspruch 7, dadurch gekennzeichnet, dass R für Chlor und n für 2 steht, während $R_1$, $R_2$, $R_3$ Wasserstoff und X $C_1$-$C_2$-Halogenalkyl bedeuten.

10. Mittel gemäss Anspruch 2, dadurch gekennzeichnet, dass im Acylamidderivat der Formel I für R Trifluormethyl steht, während $R_1$, $R_2$, $R_3$ Wasserstoff und X $C_1$-$C_2$-Halogenalkyl bedeuten.

11. Mittel gemäss einem der Ansprüche 1 bis 10 enthaltend als Verbindung der Formel I
2-Dichloracetyl-1,2,3,4-tetrahydroisochinolin,
2-Dichloracetyl-1-methyl-1,2,3,4-tetrahydroisochinolin,
2-Dichloracetyl-1-aethyl-1,2,3,4-tetrahydroisochinolin,
2-Dichloracetyl-1-isopropyl-1,2,3,4-tetrahydroisochinolin,
2-Dichloracetyl-1,3-dimethyl-1,2,3,4-tetrahydroisochinolin,
2-Dichloracetyl-6,7-dimethoxy-1,2,3,4-tetrahydroisochinolin,
2-Dichloracetyl-3-ethyl-1,2,3,4-tetrahydroisochinolin

oder

2-Dichloracetyl-4-ethyl-1,2,3,4-tetrahydroisochinolin.

12. Ein Mittel gemäss einem der Ansprüchen 1 bis 11 zum Schützen von Kulturpflanzen gegen die phytotoxische Wirkung herbizider Halogenacetanilide der Formel IV

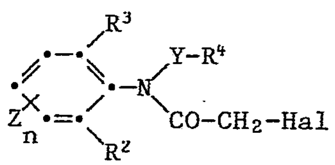

(IV).

worin

Hal Halogen,

$R^2$ und $R^3$ unabhängig voneinander Wasserstoff, Halogen, niederes Alkyl, Alkoxy, Alkylthio, Halogenalkyl, Alkoxyalkyl oder Alkylthioalkyl, Z Wasserstoff, Halogen, niederes Alkyl, Alkoxy, Alkylthio, Halogenalkyl, Alkoxyalkyl oder Alkylthioalkyl bedeutet, wobei die vorgenannten Reste Z vorzugsweise in 3-Stellung in Bezug auf das Stickstoffatom stehen und n 0 bis 3, Y gegebenenfalls bis zu zweifach durch $C_1$-$C_4$-Alkyl substituiertes $C_1$-$C_4$-Alkylen, und $R^4$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkanoyl, gegebenenfalls substituiertes Benzoyl, gegebenenfalls substituiertes 1,3,4-Oxadiazol-2-yl, 1,3,4-Thiadiazol-2-yl, 1,3,4-Triazol-3-yl oder 1,3,4-Triazol-1-yl bedeutet.

13. Ein Mittel gemäss Anspruch 12 zum Schützen von Kulturpflanzen gegen die phytotoxische Wirkung folgender herbizider Chloracetanilide:

N-Aethoxymethyl-N-chloracetyl-2-äthyl-6-methylanilin,
N-Chloracetyl-N-methoxymethyl-2,6-diäthylanilin,
N-Chloracetyl-N-(2-methoxyäthyl)-2,6-dimethylanilin,
N-(2-Allyloxyäthyl)-N-chloracetyl-2,6-dimethylanilin,
N-Chloracetyl-N-(2-n-propoxyäthyl)-2,6-dimethylanilin,
N-Chloracetyl-N-(2-isopropoxyäthyl)-2,6-dimethylanilin,

N-Chloracetyl-N-(2-methoxyäthyl)-2-äthyl-6-dimethylanilin,
N-Chloracetyl-N-(methoxyäthyl)-2,6-diäthylanilin,
N-(2-Aethoxyäthyl)-N-chloracetyl-2-äthyl-6-methylanilin,
N-Chloracetyl-N-(2-methoxy-1-methyläthyl)-2-methylanilin,
N-Chloracetyl-N-(2-methoxy-1-methyläthyl)-2,6-methylanilin,
N-Chloracetyl-N-(2-methoxy-1-methyläthyl)-2,6-diäthylanilin,
N-Chloracetyl-N-(2-methoxy-1-methyläthyl)-2-äthyl-6-methylanilin,
N-(2-Aethoxyäthyl)-N-chloracetyl-2,6-diäthylanilin,
N-Chloracetyl-N-(2-propoxyäthyl)-2-äthyl-6-methylanilin,
N-Chloracetyl-N-(2-propoxyäthyl)-2-diäthylanilin,
N-Chloracetyl-N-(2-isopropoxyäthyl)-2-äthyl-6-methylanilin,
N-Aethyloxycarbonylmethyl-N-chloracetyl-2,6-dimethylanilin,
N-Aethoxycarbonylmethyl-N-chloracetyl-2,6-diäthylanilin,
N-Chloracetyl-N-methoxycarbonylmethyl-2,6-dimethylanilin,
N-Chloracetyl-N-(2,2-diäthoxyäthyl)-2,6-dimethylanilin,
N-Chloracetyl-N-(2-methoxy-1-methyläthyl)-2,3-dimethylanilin,
N-(2-Aethoxyäthyl)-N-chloracetyl-2-methylanilin,
N-Chloracetyl-N-(2-methoxyäthyl)-2-methylanilin,
N-Chloracetyl-N-(2-methoxy-1-methyläthyl)-2,6-dimethylanilin,
N-(2-Aethoxy-2-methyläthyl)-N-chloracetyl-2-äthyl-6-methylanilin,
N-Chloracetyl-N-(1-äthyl-2-methoxyäthyl)-2,6-dimethylanilin,
N-Chloracetyl-N-(2-methoxyäthyl)-2-methoxy-6-methylanilin,
N-n-Butoxymethyl-N-chloracetyl-2-tert.-butylanilin,
N-(2-Aethoxyäthyl-methyläthyl)-2,6-dimethyl-N-chloracetylanilin,
N-Chloracetyl-N-(2-methoxyäthyl)-2-chlor-6-methylanilin,
N-(2-Aethoxyäthyl)-N-chloracetyl-2-chlor-6-methylanilin,
N-(2-Aethoxyäthyl)-N-chloracetyl-2,3,6-trimethylanilin,
N-Chloracetyl-N-(2-methoxyäthyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-äthyl-6-methylanilin,
N-Chloracetyl-N-(1,3-dioxolan-2-ylmethyl)-2,6-dimethylanilin,
N-Chloracetyl-N-(1,3-dioxolan-2-ylmethyl)-2-äthyl-6-methylanilin,
N-Chloracetyl-N-(1,3-dioxan-2-ylmethyl)-2-äthyl-6-methylanilin,
N-Chloracetyl-N-(2-furanylmethyl)-2,6-dimethylanilin,
N-Chloracetyl-N-(2-furanylmethyl)-2-äthyl-6-methylanilin,

N-Chloracetyl-N-(2-tetrahydrofuranylmethyl)-2,6-methylanilin,
N-Chloracetyl-N-(N-propargylcarbamoylmethyl)-2,6-methylanilin,
N-Chloracetyl-N-(N,N-dimethylcarbamoylmethyl)-2,6-methylanilin,
N-(n-Butoxymethyl)-N-chloracetyl-2,6-diäthylanilin,
N-(2-n-Butoxyäthyl)-N-chloracetyl-2,6-diäthylanilin,
N-Chloracetyl-N-(2-methoxy-1,2-dimethyläthyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin,
N-Chloracetyl-N-(1H-pyrazol-1-ylmethyl)-2-äthyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diäthylanilin,
N-Benzoylmethyl-N-chloracetyl-2,6-dimethylanilin,
N-Benzoylmethyl-N-chloracetyl-2-äthyl-6-methylanilin,
N-Chloracetyl-N-(5-methyl-1,3,4-oxadiazol-2-yl)-2,6-diäthylanilin,
N-Chloracetyl-N-(5-methyl-1,3,4-oxadiazol-2-yl)-2-äthyl-6-methylanilin,
N-Chloracetyl-N-(5-methyl-1,3,4-oxadiazol-2-yl)-2-tert.butylanilin,
N-Chloracetyl-N-(4-chlorbenzoylmethyl)-2,6-dimethylanilin oder
N-Chloracetyl-N-(1-methyl-5-methylthio-1,3,4-triazol-2-ylmethyl)-2,6-diäthylanilin

14. Verfahren zur Herstellung von 1,2,3,4-Tetrahydroisochinolinen der Formel I

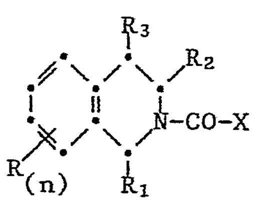

(I)

worin

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3,

$R_1$, $R_2$ und $R_3$ je Wasserstoff, $C_1$-$C_6$-Alkyl oder $C_3$-$C_6$-Alkenyl und

X $C_1$-$C_6$-Halogenalkyl oder $C_2$-$C_6$-Halogenalkenyl bedeuten,

mit der Massgabe, dass folgende Verbindungen nicht mit umfasst sind:
2-Dichloracetyl-1,2,3,4-tetrahydroisochinolin,
2-Dichloracetyl-1-methyl-1,2,3,4-tetrahydroisochinolin,
2-Dichloracetyl-1-aethyl-1,2,3,4-tetrahydroisochinolin,
2-Dichloracetyl-1-isopropyl-1,2,3,4-tetrahydroisochinolin,
2-Dichloracetyl-1,3-dimethyl-1,2,3,4-tetrahydroisochinolin,
2-Dichloracetyl-6,7-dimethoxy-1,2,3,4-tetrahydroisochinolin,
2-Dichloracetyl-3-ethyl-1,2,3,4-tetrahydroisochinolin
und
2-Dichloracetyl-4-ethyl-1,2,3,4-tetrahydroisochinolin, dadurch gekennzeichnet, dass man ein Acylderivat der Formel II

X-CO-Q (II)

bzw. dessen Anhydrid, worin Q Chlor oder Brom oder den Rest -O-CO-X bedeutet und X die im Anspruch 1 gegebene Bedeutung haben, in einem inerten organischen Lösungsmittel, in Gegenwart der mindestens äquimolaren Menge eines säurebindenden Mittels, mit einem 1,2,3,4-Tetrahydroisochinolin der Formel III umsetzt

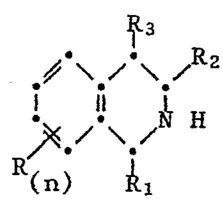
(III)

worin $R_{(n)}$, $R_1$, $R_2$, $R_3$ wie zuvor definiert sind.

15. Verfahren zur Herstellung von 1,2,3,4-Tetrahydroisochinolinen der Formel I

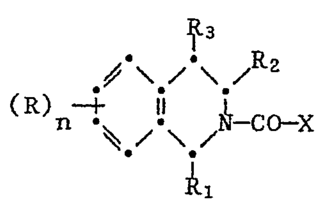
(I)

worin
X $CHCl_2$

und

R gleich oder verschieden Wasserstoff, Halogen, $C_1$-$C_4$-Alkyl, $C_1$-$C_4$-Alkoxy, $C_1$-$C_4$-Alkylthio, Halogenalkyl, Halogenalkoxy, Alkenyloxy, Alkinyloxy, Dioxymethylen oder Nitro,

n = eine Zahl 1, 2 oder 3 und

$R_1$, $R_2$ und $R_3$ je Wasserstoff, $C_1$-$C_6$-Alkyl oder $C_3$-$C_6$-Alkenyl bedeuten, dadurch gekennzeichnet, dass man ein 1,2,3,4-Tetrahydroisochinolin der Formel III

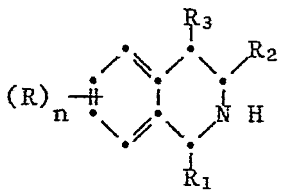

(III)

worin $R_{(n)}$, $R_1$, $R_2$ und $R_3$ wie zuvor definiert sind, mit Choral oder einem durch Addition an dessen Oxogruppe gebildetem Chloralderivat in einem wässrigen Medium, und/oder einem polaren organischen Lösungsmittel, in Gegenwart säurebindender Mittel und der katalytisch wirkenden Menge eines anorganischen oder organischen Cyanides umsetzt.

16. Verwendung eines Mittels gemäss einem der Ansprüche 1 bis 13 zum Schützen von Kulturpflanzen gegen die phytotoxische Wirkung herbizider Halogenacetanilide.

17. Verfahren zur selektiven Bekämpfung von Unkräutern in Nutzpflanzenkulturen, dadurch gekennzeichnet, dass man die Kulturpflanzen oder deren Anbaufläche sowohl mit einem herbizid wirksamen Halogenacetanilid gemäss Anspruch 12 oder 13, als auch mit einer wirksamen Menge eines Acylamidderivates der Formel I gemäss einem der Ansprüche 1 bis 11 als Gegenmittel behandelt.

18. Verwendung der Acylamidderivate der Formel I gemäss Anspruch 16 zum Schützen von Mais gegen die schädigende Wirkung herbizid wirksamer Halogenacetanilide.

19. Verfahren zum Schützen von Kulturpflanzen von Schäden, die bei der Applikation von Halogenacetanilid Herbiziden gemäss Anspruch 12 oder 13 auftreten, dadurch gekennzeichnet, dass man entweder die Anbaufläche für die Pflanze vor oder während der Applikation des Herbizides oder den Samen oder die Stecklinge an Pflanzen, oder die Pflanze selbst mit einer wirksamen Menge eines Acylamidderivates der Formel I gemäss einem der Ansprüche 1 bis 11 bedeutet.

20. Saatgut von Nutzpflanzen, das mit einer antagonistisch wirksamen Menge eines Acylamidderivates der Formel 1 gemäss einem der Ansprüche 1 bis 11 behandelt worden ist.

FO 7.5 HH/sm*

Europäisches Patentamt

# EUROPÄISCHER RECHERCHENBERICHT

0236268

Nummer der Anmeldung

EP 87 81 0097

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | FR-A-2 153 002 (GULF) * Seite 3, Zeile 14 - Seite 5, Zeile 32; Seite 58; Seite 66, Patentansprüche 2,12 * | 1-20 | A 01 N 25/32<br>A 01 N 43/42 |
| E | EP-A-0 190 105 (CIBA-GEIGY) * Patentansprüche 15,16,17; Beispiel 7; Seiten 71,72; Tabelle 6 * | 1-20 | |
| L | CHEMICAL PATENTS INDEX, BASIC ABSTRACTS JOURNAL, Section C, AGDOC, week 8632, 1. Oktober 1986, Zusammenfassung Nr. 86-208 365, Derwent Publications, Ltd, London, GB; & JP-A-26 2883 (TOKUYAMA SODA K.K.) 27-06-1986 | 1-20 | |
| | | | RECHERCHIERTE SACHGEBIETE (Int. Cl.4) |
| X | FR-A-2 564 288 (BAYER) * Seite 43, Verbindung I-419; Seite 46, Verbindung I-459; Patentansprüche 1-6 * | 1-20 | A 01 N |
| X | EP-A-0 006 542 (BAYER) * Patentansprüche 1-6 * | 1-20 | |
| X | EP-A-0 023 307 (BAYER) * Patentansprüche 1-8 * | 1-20 | |

Der vorliegende Recherchenbericht wurde für alle Patentansprüche erstellt.

| Recherchenort | Abschlußdatum der Recherche | Prüfer |
|---|---|---|
| DEN HAAG | 17-06-1987 | NATUS |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82